(11) **EP 3 008 807 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **14714717.7**

(22) Anmeldetag: **03.04.2014**

(51) Int Cl.:
*H02K 11/21* (2016.01)    *H02K 11/27* (2016.01)
*H02P 21/14* (2016.01)    *H02P 6/16* (2016.01)
*H02P 6/34* (2016.01)    *H02P 6/10* (2006.01)

(86) Internationale Anmeldenummer:
**PCT/EP2014/056636**

(87) Internationale Veröffentlichungsnummer:
**WO 2014/198437 (18.12.2014 Gazette 2014/51)**

(54) **ELEKTRONISCH KOMMUTIERTER ELEKTROMOTOR MIT EINER OBERWELLENKOMPENSATION**

ELECTRONICALLY COMMUTATED ELECTRIC MOTOR WITH HARMONIC COMPENSATION

MOTEUR ÉLECTRIQUE À COMMUTATION ÉLECTRONIQUE PRÉSENTANT UN MOYEN POUR COMPENSER LES HARMONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2013 DE 102013211151**

(43) Veröffentlichungstag der Anmeldung:
**20.04.2016 Patentblatt 2016/16**

(73) Patentinhaber: **Robert Bosch GmbH**
**70442 Stuttgart (DE)**

(72) Erfinder:
• **VOLLMER, Ulrich**
**73235 Weilheim (DE)**

• **XU, Yanhui**
**71254 Ditzingen-Hirschlanden (DE)**

(56) Entgegenhaltungen:
**WO-A2-2012/126029     US-A1- 2012 268 052**

• **DELALEAU E ET AL: "Flatness-based hierarchical control of the PM synchronous motor", AMERICAN CONTROL CONFERENCE, 2004. PROCEEDINGS OF THE 2004 BOSTON, MA, USA JUNE 30-JULY 2, 2004, PISCATAWAY, NJ, USA,IEEE, 30. Juni 2004 (2004-06-30), Seiten 65-70vol.1, XP031988767, ISBN: 978-0-7803-8335-7**

**Beschreibung**

Stand der Technik

Die Erfindung betrifft einen elektrischen Antrieb, insbesondere eine elektronisch kommutierte elektrische Maschine oder einen elektronisch kommutierten Elektromotor mit einem Stator und einem insbesondere permanentmagnetisch ausgebildeten Rotor. Der Elektromotor weist auch eine mit dem Stator verbundene Steuereinheit auf. Die Steuereinheit ist ausgebildet, Steuersignale zum Bestromen von Statorspulen des Stators, zum Erzeugen eines magnetischen Drehfeldes, zu erzeugen. Der Elektromotor ist ausgebildet, eine Drehmomentwelligkeit eines von dem Rotor erzeugten Drehmoments wenigstens teilweise zu kompensieren.

Die Offenlegungsschrift US 2012/0268052 A1 offenbart einen Elektromotor, welcher ausgebildet ist, eine Drehmomentwelligkeit zu reduzieren.

Die Offenlegungsschrift WO 2012/126029 A2 offenbart eine Phasenstrom-Kompensation zur Offest-Korrektur beim Bestromen eines Elektromotors.

Der wissenschaftliche Artikel von Deleleau E. et Al. mit dem Titel "Flatness based hierarchical control of the PM synchronous motor" published in 2004 at the American Control Conference, offenbart eine Ermittlung von Kupferverlusten einer elektrischen Maschine.

Offenbarung der Erfindung

Die Erfindung wird durch die Gegenstände der unabhängigen Ansprüche definiert.

Erfindungsgemäß weist der Elektromotor einen Rotorlagesensor und einen Stromsensor auf. Der Stromsensor ist ausgebildet, in den Statorspulen fließende Ströme zu erfassen und ein die Ströme repräsentierendes Stromsignal zu erzeugen. Die Steuereinheit weist erfindungsgemäß eine Verarbeitungseinheit auf, welche ausgebildet ist, in Abhängigkeit des Stromsignals und einer auf die Statorspulen beaufschlagten Spannung und eines von dem Rotorlagesensor erzeugten Rotorpositionssignals Oberwellen der elektromotorischen Kraft zu ermitteln und ein die Wirkung der Oberwellen kompensierendes Steuersignal zu erzeugen. Die Steuereinheit, insbesondere die Verarbeitungseinheit, ist ausgebildet, das kompensierende Steuersignal mit dem Steuersignal zu überlagern, sodass die Wirkung der Oberwellen und so die Drehmomentwelligkeit wenigstens teilweise oder vollständig kompensiert werden können.

Es wurde nämlich erkannt, dass das Drehmoment des Elektromotors bei einer im zeitlichen Verlauf sinusförmigen elektromotorischen Kraft ein konstantes Drehmoment bewirkt, wogegen der permanentmagnetisch ausgebildete Rotor Oberwellen in der EMK erzeugt, was einen unerwünschten Frequenzgehalt im zeitlichen Drehmomentverlauf bewirkt, der sich als sogenannte Drehmomentwelligkeit bemerkbar macht.

So kann der elektrische Antrieb vorteilhaft beim Erzeugen eines Drehmomentes keine unangenehmen Geräusche erzeugen. Bei einem Elektromotor, welcher beispielsweise Bestandteil einer Servolenkung eines Kraftfahrzeugs ist, können die von dem Elektromotor erzeugten Oberwellen als vom menschlichen Ohr wahrnehmbare Geräusche in einen Fahrzeuginnenraum übertragen werden oder als Vibrationen über eine Lenksäule übertragen werden. Der Elektromotor kann auch als Bestandteil von anderen elektrischen Antrieben, beispielsweise als Antrieb einer Waschmaschine, als Antrieb eines Elektrofahrrades oder als Antrieb eines Elektrofahrzeugs vorteilhaft weniger Störgeräusche erzeugen.

Der elektronisch kommutierte Elektromotor ist beispielsweise eine Synchronmaschine, eine Synchronmaschine mit permanentmagnetisch ausgebildetem Rotor, eine Asynchronmaschine, eine Reluktanzmaschine oder eine Transversalflussmaschine.

Die Erfindung betrifft auch eine elektrische Maschine mit den Eigenschaften des Elektromotors der vorbeschriebenen Art. Die elektrische Maschine kann sowohl als Elektromotor als auch zusätzlich als Generator betrieben werden. Wenn in den folgenden Ausführungsbeispielen Eigenschaften des Elektromotors beschrieben sind, so gelten diese sinngemäß auch für die elektrische Maschine.

Die Verarbeitungseinheit ist bevorzugt durch einen Mikroprozessor, einen Mikrocontroller, ein ASIC (ASIC = Application-Specific-Integrated-Circuit), oder einen digitalen Signalprozessor gebildet.

In einer bevorzugten Ausführungsform weist der Elektromotor einen Spannungssensor auf, wobei der Spannungssensor mit den Statorspulen verbunden und ausgebildet ist, die an den Statorspulen abfallenden Spannungen zu erfassen, wobei die Steuereinheit, insbesondere die Verarbeitungseinheit, ausgebildet ist, das die Oberwellen kompensierende Steuersignal in Abhängigkeit der erfassten, an den Statorspulen abfallenden Spannungen zu erzeugen. Die an den Statorspulen abfallenden Spannungen entsprechen dann den zuvor erwähnten, auf die Statorspulen beaufschlagten Spannungen. Die Spannung kann so vorteilhaft mittels des Spannungssensors erfasst werden, wogegen die Spannung sonst als vorbestimmte Spannung als bekannt angenommen werden kann.

Erfindungsgemäß weist die Steuereinheit, insbesondere die Verarbeitungseinheit, einen RLS-Schätzer auf, welcher ausgebildet ist, die Oberwellen, insbesondere Phase und Amplitude der Oberwellen, mittels einer Methode des kleinsten Fehlerquadrats zu ermitteln. Weiter bevorzugt ist die Steuereinheit ausgebildet, das kompensierende Steuersignal in Abhängigkeit der ermittelten Oberwellen zu erzeugen. So kann vorteilhaft eine In-Situ-Ermittlung der von dem Elektromotor erzeugten Oberwellen in Abhängigkeit der Statorspulenströme oder zusätzlich der Statorspulenspannungen und des Rotorpositionssignals von der Steuereinheit, insbesondere der Verarbeitungseinheit durchgeführt werden.

Die In-Situ Eigenschaft bedeutet, dass die Ermittlung, weiter bevorzugt die Kompensierung der Oberwellen auf schnellstmöglichem Verarbeitungsweg der Signale während des Betriebs des Elektromotors erfolgen kann.

Erfindungsgemäß ist die Steuereinheit, insbesondere die Verarbeitungseinheit, ausgebildet, den Stator mittels einer flachheitsbasierten Steuerung in Abhängigkeit des kompensierenden Steuersignals, und so in Abhängigkeit der von dem RLS-Schätzer ermittelten EMK-Oberwellen, anzusteuern. Mittels der flachheitsbasierten Steuerung kann vorteilhaft ein nicht lineares System, repräsentiert durch den Elektromotor, angesteuert werden.

In einer bevorzugten Ausführungsform ist die Steuereinheit ausgebildet, eine Spannung zum Beaufschlagen der Statorspulen in Abhängigkeit des kompensierenden Steuersignals zu erzeugen. So kann das von dem Elektromotor erzeugte Drehmoment vorteilhaft von der Drehmomentwelligkeit befreit sein, oder die Drehmomentwelligkeit im Drehmoment reduziert sein.

In einer bevorzugten Ausführungsform ist die Verarbeitungseinheit ausgebildet, ein ein kompensierendes Drehmoment repräsentierendes Drehmomentsignal in Abhängigkeit der von dem RLS-Schätzer ermittelten Oberwellen zu erzeugen und das kompensierende Steuersignal in Abhängigkeit des kompensierenden Drehmomentsignals zu erzeugen. So kann vorteilhaft eine In-Situ-Ermittlung der von dem Elektromotor erzeugten Oberwellen, insbesondere in Abhängigkeit der erfassten Phasenströme und Phasenspannungen erfolgen. Die Kompensation der Oberwellen kann somit ebenfalls in situ erfolgen. Die In-Situ-Kompensation bedeutet, dass während eines Motorbetriebs schnellstmöglich, insbesondere mittels der Verarbeitungseinheit und der so zur Verfügung stehenden Rechenmittel, die von dem Elektromotor erzeugten Oberwellen während des aktuellen Bestromungszustandes des Elektromotors erfolgt, sodass es praktisch zu keiner spürbaren Abstrahlung der Oberwellen kommen kann, insoweit die Oberwellen mit dem kompensierenden Drehmomentsignal nicht entstehen können.

In einer bevorzugten Ausführungsform des Elektromotors weist die Verarbeitungseinheit ein elektrisches Modell des Elektromotors auf, das eine Stellgröße für die auf die Statorspulen zu beaufschlagende Spannung in Abhängigkeit der Induktivität der Statorspulen und eines ermittelten magnetischen Flusses repräsentiert, wobei der magnetische Fluss die zu kompensierenden Oberwellen aufweist, und die Verarbeitungseinheit ausgebildet ist, in Abhängigkeit der Stellgröße das kompensierende Steuersignal zu erzeugen. So kann vorteilhaft das kompensierende Steuersignal erzeugt werden, ohne die von dem Elektromotor tatsächlich abgestrahlten Oberwellen - beispielsweise mittels eines Mikrofons oder eines Körperschallaufnehmers zu messen.

In einer bevorzugten Ausführungsform repräsentiert der magnetische Fluss die Oberwellen in Form einer Fourierreihe. So können vorteilhaft gezielt insbesondere ungeradzahlige Oberwellen, welche maßgeblich am Störspektrum des Drehmomentes beteiligt sind, mittels des kompensierenden Drehmomentsignals kompensiert werden.

Die Erfindung betrifft auch eine elektrische Servolenkung für ein Fahrzeug mit einem Elektromotor der vorbeschriebenen Art. Die Servolenkung ist ausgebildet, mittels des Elektromotors ein lenkunterstützendes Lenkmoment zu erzeugen.

Die Erfindung betrifft auch einen Bremskraftverstärker für ein Fahrzeug mit einem Elektromotor der vorbeschriebenen Art. Der Bremskraftverstärker ist ausgebildet, mittels des Elektromotors eine bremsunterstützende Bremskraft zu erzeugen.

Die Erfindung betrifft auch ein Elektrofahrrad mit einem Elektromotor der vorbeschriebenen Art. Der Elektromotor ist ein Antriebsmotor des Elektrofahrrades.

Die Erfindung wird nun im Folgenden anhand von einer Figur und weiteren Ausführungsbeispielen beschrieben. Weitere vorteilhafte Ausführungsvarianten ergeben sich aus den Merkmalen der Figur und der abhängigen Ansprüche.

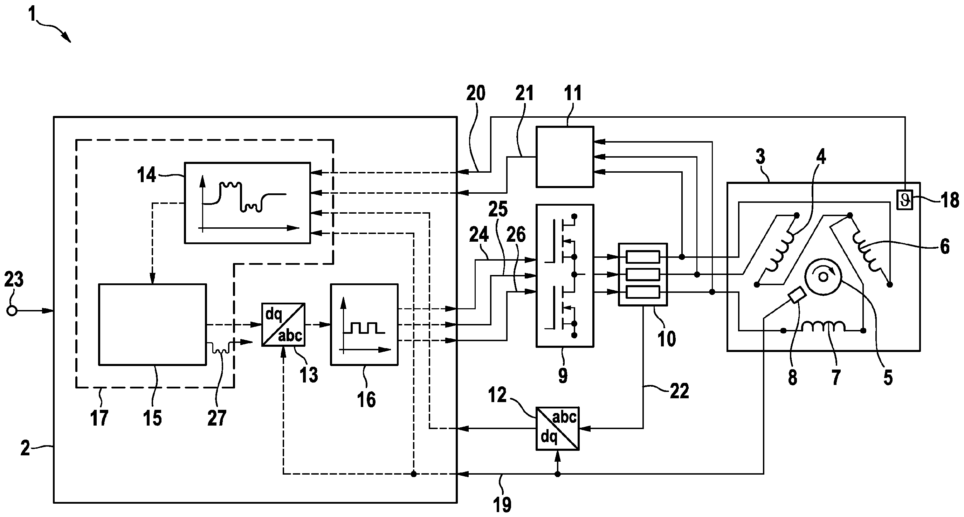

Figur 1 zeigt ein Ausführungsbeispiel für einen elektrischen Antrieb, insbesondere einen elektronisch kommutierten Elektromotor, welcher ausgebildet ist, die Welligkeit im Drehmoment zu kompensieren und dazu in Abhängigkeit eines elektrischen Modells des Elektromotors und erfasster Statorspulenströme, Statorspulenspannungen und einer ermittelten Rotorposition, entstehende Oberwellen zu ermitteln und ein den Effekt der Oberwellen kompensierendes Steuersignal zu erzeugen und den Elektromotor mit dem kompensierenden Steuersignal anzusteuern, so das die Drehmomentwelligkeit in einem vom Elektromotor erzeugten Drehmoment eliminiert ist.

Figur 1 zeigt ein Ausführungsbeispiel für einen elektronisch kommutierten Elektromotor 1. Der Elektromotor 1 weist eine Steuereinheit 2, einen Stator 3 und einen Rotor 5 auf. Der Stator 3 weist in diesem Ausführungsbeispiel drei Statorspulen 4, 6 und 7 auf. Der Elektromotor 1 weist auch eine Leistungsendstufe 9 auf. Die Leistungsendstufe 9 ist ausgangsseitig über einen Stromsensor 10 mit den Statorspulen 4, 6 und 7 verbunden und ist ausgebildet, die Statorspulen 4, 6 und 7 zum Erzeugen eines magnetischen Drehfeldes zu bestromen. Der Rotor 5 ist in diesem Ausführungsbeispiel permanentmagnetisch ausgebildet. Der Elektromotor 1 weist auch einen Rotorpositionssensor 8 auf, welcher ausgebildet ist, eine Rotorposition des Rotors 5 zu erfassen und der Rotorposition entsprechendes Rotorpositionssignal zu erzeugen und auszugeben. Der Rotorpositionssensor 8 ist beispielsweise ein magnetoresistiver Sensor, insbesondere ein AMR-Sensor (AMR = Anisotrope-Magneto-Resistive) oder ein GMR-Sensor (GMR = Giant-Magneto-Resistive). Der Stromsensor ist in diesem Ausführungsbeispiel durch einen Shunt-Widerstand für jede Statorspule gebildet.

Der Elektromotor 1 weist auch einen Temperatursensor 18 auf, welcher ausgebildet ist, eine Temperatur des Stators, insbesondere eines Blechpakets des Stators 3, zu erfassen und ein die Temperatur repräsentierendes Temperatursignal zu erzeugen. Die Steuereinheit 2 ist eingangsseitig mit dem Rotorpositionssensor 8 über eine Verbindungsleitung 19 und mit dem Temperatursensor 18 über eine Verbindungsleitung 20 verbunden. Der Elektromotor 1 weist auch einen Spannungssensor 11 auf, welcher eingangsseitig mit den Statorspulen 4, 6 und 7 verbunden und ausgebildet ist, eine über den Statorspulen abfallende Spannung zu erfassen und ein entsprechendes Spannungssignal zu erzeugen und ausgangsseitig auszugeben. Der Spannungssensor 11 ist ausgangsseitig über eine Verbindungsleitung 21 mit der Steuereinheit 2 verbunden.

Der Stromsensor 10 ist ausgebildet, durch die Statorspulen 4, 6 und 7 fließende Ströme zu erfassen und ein die Ströme repräsentierendes Stromsignal zu erzeugen und ausgangsseitig über eine Verbindungsleitung 22 an die Steuereinheit 2 zu senden. Der Stromsensor 10 ist in diesem Ausführungsbeispiel über einen Koordinatentransformator 12 mit der Steuereinheit 2 verbunden. Der Koordinatentransformator 12, welcher Bestandteil der Steuereinheit 2 sein kann, ist ausgebildet, die durch die Statorspulen 4, 6 und 7 fließenden Phasenströme zu erfassen und in ein Rotorkoordinatensystem - insbesondere mittels einer Park-Transformation - zu transformieren und ausgangsseitig auszugeben. Das Rotorkoordinatensystem ist beispielsweise ein d-q-Koordinatensystem.

Die Steuereinheit 2 weist einen Pulsweitenmodulator 16 auf, welcher ausgebildet ist, Steuersignale zum Erzeugen eines magnetischen Drehfeldes zu erzeugen und ausgangsseitig über Verbindungsleitungen 24, 25 und 26 an die Leistungsendstufe 9 zu senden. Die Leistungsendstufe 9 weist in diesem Ausführungsbeispiel für jede der Statorspulen 4, 6 und 7 eine Halbleiterschalter-Halbbrücke auf.

Die Steuereinheit 2 weist in diesem Ausführungsbeispiel eine Kompensationseinheit 17 auf, welche durch die zuvor erwähnte Verarbeitungseinheit gebildet sein kann.

Die Kompensationseinheit 17 ist ausgebildet, in Abhängigkeit des eingangsseitig vom Stromsensor 10 empfangenen Stromsignals, des vom Rotorpositionssensor 8 empfangenen Rotorpositionssignals und des eingangsseitig vom Spannungssensor 11 empfangenen Spannungssignals und von dem Temperatursensor 18 empfangenen Temperatursignals die Oberwellen in einem zeitlichen Verlauf der EMK des Elektromotors 1 (EMK = Elektro-Motorische-Kraft) zu schätzen und ein die Wirkung der Oberwellen kompensierendes Steuersignal 27 zu erzeugen und ausgangsseitig an den Pulsweitenmodulator 16 zum Ansteuern der Leistungsendstufe 9 zu senden. Zwischen der Kompensationseinheit 17 und dem Pulsweitenmodulator 16 ist im Signalweg ein Koordinatentransformator 13 angeordnet, welcher ausgebildet ist, das von der Kompensationseinheit 17 erzeugte Steuersignal - insbesondere mittels der Park-Transformation - von Rotorkoordinaten in Statorkoordinaten, insbesondere in ein Dreiphasensystem, zu transformieren. Die Koordinatentransformatoren 12 und 13 sind jeweils über die Verbindungsleitung 19 mit dem Rotorpositionssensor 8 verbunden und können von diesem das Rotorpositionssignal zur Koordinatentransformation empfangen.

Die Kompensationseinheit 17 weist in diesem Ausführungsbeispiel einen RLS-Schätzer 14 auf. Der RLS-Schätzer 14 ist ausgebildet, in Abhängigkeit des von der Steuereinheit 2 eingangsseitig empfangenen Spannungssignals, des Stromsignals, des Temperatursignals und des Rotorpositionssignals mittels eines den Elektromotor 1, insbesondere die Induktivitäten und die Widerstände der Statorspulen 4, 6 und 7 repräsentierenden Modells, und mittels der Methode der kleinsten Fehlerquadrate einen magnetischen Fluss, insbesondere die Fourierkoeffizienten der Grund- und Oberwellen des magnetischen Flusses zu ermitteln und ausgangsseitig ein die Oberwellen des magnetischen Flusses, repräsentierendes Ausgangssignal zu erzeugen und auszugeben. Die Kompensationseinheit 17 weist auch eine Kompensations-Steuereinheit 15 auf, welche eingangsseitig mit dem RLS-Schätzer 14 verbunden ist. Die Kompensations-Steuereinheit 15 ist ausgebildet, in Abhängigkeit des von dem RLS-Schätzer 14 erzeugten Ausgangssignal, das die ermittelten Fourier-Koeffizienten repräsentiert, und in Abhängigkeit eines am Eingang 23 empfangenen ein Soll-Drehmoment repräsentierenden Drehmomentsignals, das kompensierende Steuersignal 27 zu erzeugen und an den Pulsweitenmodulator 16 zu senden. Der Pulsweitenmodulator 16 kann aus dem Drehmomentsignal und dem kompensierenden Steuersignal ein Steuerpulsmuster zum Bestromen des Stators 3 erzeugen und an die Leistungsendstufe 9 senden. So ist sichergestellt, dass der Elektromotor 1 ein dem Drehmomentsignal entsprechendes, von einer Drehmomentwelligkeit befreites Drehmoment erzeugt.

Die Steuereinheit 2 weist auch einen Eingang 23 für ein Drehmomentsignal auf. Das Drehmomentsignal repräsentiert ein Soll-Drehmoment eines von dem Elektromotor 1 zu erzeugenden und ausgangsseitig an einer Rotorwelle des Rotors 5 zu erzeugenden Drehmoments.

Der RLS-Schätzer 14 kann beispielsweise das folgende elektrische Modell des Elektromotors aufweisen:

$$\begin{bmatrix} U_d \\ U_q \end{bmatrix} = R \begin{bmatrix} I_d \\ I_q \end{bmatrix} + \begin{bmatrix} L_d \dot{I}_d \\ L_q \dot{I}_q \end{bmatrix} + \dot{\varphi} \begin{bmatrix} -\Psi_q \\ \Psi_d \end{bmatrix} \tag{1}$$

worin bedeuten:

$U_{d,q}$ = Spannung über den Statorspulen, in Rotorkoordinaten
$I_{d,q}$ = Strom durch die Statorspulen, in Rotorkoordinaten
$L_{d,q}$ = Induktivität der Statorspulen, in Rotorkoordinaten
R = Ohmscher Widerstand der Statorspulen
$\Psi_{d,q}$ = Magnetischer Fluss, in Rotorkoordinaten
$\varphi_{d,q}$ = Rotorwinkel elektrisch, erfasst durch den Rotorpositionssensor

Die magnetische Flussverkettung in Gl. 1 kann wie folgt dargestellt werden:

$$(2) \qquad \begin{bmatrix} \Psi_d \\ \Psi_q \end{bmatrix} = \begin{bmatrix} L_d I_d \\ L_q I_q \end{bmatrix} + \begin{bmatrix} \Psi_{pm\_d} \\ \Psi_{pm\_q} \end{bmatrix}$$

worin der Index pm für Permanentmagnet steht, im Falle eines permanentmagnetisch ausgebildeten Rotors, und die Indizes d und q bedeuten, dass der magnetische Fluss in Rotorkoordinaten ermittelt ist.

Der Vektor für den magnetischen Fluss vom Rotor- Permanentmagnet entsteht nach Park-Transformation von $\Psi_{pm\_a/b/c}$ in Stator-Koordinaten, die in Gl. 3 dargestellt werden:

$$(3) \qquad \begin{bmatrix} \Psi_{pm\_a} \\ \Psi_{pm\_b} \\ \Psi_{pm\_c} \end{bmatrix} = \begin{bmatrix} a_1 \cos(\varphi) + a_5 \cos(5\varphi) + a_7 \cos(7\varphi) + a_{11} \cos(11\varphi) + a_{13} \cos(13\varphi) \\ \Psi_{pm\_a}(\varphi - \dfrac{2\pi}{3}) \\ \Psi_{pm\_a}(\varphi + \dfrac{2\pi}{3}) \end{bmatrix}$$

worin die Indizes a, b, c jeweils für eine Phase eines dreiphasigen Stators, also einen Stator mit drei Statorspulen steht und die Koeffizienten $a_1$, $a_5$, $a_7$, $a_{11}$ und $a_{13}$ jeweils Fourier-Koeffizienten sind.

Die Elemente des Vektors sind Funktionen von Amplituden der EMK-Oberwellen (EMK = Elektro-Motorische-Kraft) und elektrischer Winkel $\varphi$.

$$(4) \qquad \begin{bmatrix} \Psi_{pm\_d} \\ \Psi_{pm\_q} \end{bmatrix} = \begin{bmatrix} a_1 - (5a_5 - 7a_7)\cos(6\varphi) - (11a_{11} - 13a_{13})\cos(12\varphi) \\ (5a_5 + 7a_7)\sin(6\varphi) + (11a_{11} + 13a_{13})\sin(12\varphi) \end{bmatrix}$$

Dem in dem RLS-Schätzer 14 abgespeicherten Modell liegen die folgenden Annahmen zugrunde:

Es gibt keine Eisenverluste wegen der Wirbelströme;
Der Widerstand in jeder der Phasen a, b, und c ist jeweils gleich groß;
Es gibt weder Oberwellen noch eine Asymmetrie bei der Selbst-und Gegeninduktivität der drei Phasen a, b, und c;
Es gibt keine Asymmetrie beim Permanentmagnet-Fluss $\Psi_{pm}$ in jeder der Phasen a, b, und c.

Beispielsweise weist das Modell EMK-Oberwellen ungeradzahliger Ordnungen auf, insbesondere der fünften Ordnung, siebten Ordnung, elften Ordnung und dreizehnten Ordnung.
Der RLS-Schätzer 14 in Figur 1 kann die Oberwellen derart ermitteln, dass die folgende Gleichung im Sinne der kleinsten Fehlerquadrate bestmöglich erfüllt wird:

(5)

$$
\begin{bmatrix} 0 & 5\sin(6\varphi) & 7\sin(6\varphi) & 11\sin(12\varphi) & 13\sin(12\varphi) \\ 1 & -5\cos(6\varphi) & 7\cos(6\varphi) & -11\cos(12\varphi) & 13\cos(12\varphi) \end{bmatrix} \cdot \begin{bmatrix} a_1 \\ a_5 \\ a_7 \\ a_{11} \\ a_{13} \end{bmatrix} = \begin{bmatrix} -\dfrac{U_d - RI_d - L_d \dot{I}_d + \dot{\varphi} L_q I_q}{\dot{\varphi}} \\ \dfrac{U_q - RI_q - L_q \dot{I}_q - \dot{\varphi} L_d I_d}{\dot{\varphi}} \end{bmatrix}
$$

Die allgemeine Drehmomentgleichung für den Elektromotor 1 lautet:

$$
M = \frac{3}{2} N_P (I_q \Psi_d - I_d \Psi_q)
$$

(6)

Nach dem Einsetzen von (2) in (6) zur Berücksichtigung von EMK-Oberwellen ergibt sich die Drehmoment-gleichung:

(7)
$$
M = \frac{3}{2} N_P \left[ I_q \left( \Psi_{pm\_d}(a_{1\to13}, \varphi) + L_d I_d \right) - I_d \left( \Psi_{pm\_q}(a_{5\to13}, \varphi) + L_q I_q \right) \right]
$$

Der Sollwert $I_q^*$ wird dann von der Kompensations-Steuereinheit 15 aus Gl. 7 bestimmt:

(8)
$$
I_q^* = \frac{\dfrac{M^*}{1,5 N_P} + I_d^* \Psi_{pm\_q}(a_{5\to13}, \varphi)}{\Psi_{pm\_d}(a_{1\to13}, \varphi) + \left( L_d - L_q \right) I_d^*}
$$

Das Prinzip der flachheitsbasierten Steuerung der Steuereinheit 2 in Figur 1 liegt darin, dass die Stellgrößen $U_d^*$ und $U_q^*$, vorteilhaft nach der Spannungsgleichung (1) von der Steuereinheit 2, direkt ermittelt werden können. Nach dem Einsetzen der Sollwerte von Strömen und deren zeitlicher Ableitungen in Gleichung (1) können die Stellgrößen für die Spannung $U_d^*$ und $U_q^*$ von der Steuereinheit 2 gemäß Gleichung (9) ermittelt werden:

(9)
$$
\begin{bmatrix} U_d^* \\ U_q^* \end{bmatrix} = R \begin{bmatrix} I_d^* \\ I_q^* \end{bmatrix} + \begin{bmatrix} L_d \dot{I}_d^* \\ L_q \dot{I}_q^* \end{bmatrix} + \dot{\varphi} \begin{bmatrix} -\Psi_q(I_q^*, L_q, a_{5\to13}, \varphi) \\ \Psi_d(I_d^*, L_d, a_{1\to13}, \varphi) \end{bmatrix}
$$

Die zeitliche Ableitung vom Soll-Drehmoment $\dot{M}^*$, die zur Ermittlung von den zeitlichen Ableitungen der Ströme $\dot{I}_d^*$ und $\dot{I}_q^*$ von der Steuereinheit 2 ermittelt werden kann, kann beispielsweise durch ein Zustandsvariablenfilter der Steuereinheit 2 bestimmt werden.

Mittels der so ausgebildeten Steuereinheit kann vorteilhaft eine In-Situ-Kompensation der entstehenden Drehmomentwelligkeit im Drehmoment erfolgen, so dass das an einer Motorwelle des Rotors 5 in Figur 1 abgegebene Drehmoment im zeitlichen Verlauf keine oder nur geringe Drehmomentwelligkeit aufweist, die als Körperschall über die Motorwelle abgegeben werden können und von mit der Motorwelle verbundenen Komponenten als störender Luftschall abgestrahlt werden können.

**Patentansprüche**

1. Elektronisch kommutierter Elektromotor (1) mit einem Stator (3) und einem Rotor (5) und einer mit dem Stator (3) verbundenen Steuereinheit (2), welche ausgebildet ist, Steuersignale zum Bestromen von Statorspulen (4, 6, 7) des Stators (3) zum Erzeugen eines magnetischen Drehfeldes zu erzeugen, und der Elektromotor (1) ausgebildet ist, eine Drehmomentwelligkeit eines von dem Rotor erzeugten Drehmoments wenigstens teilweise zu kompensieren,
wobei
der Elektromotor (1) einen Rotorlagesensor (8) und einen Stromsensor (10) aufweist, wobei der Stromsensor (10) ausgebildet ist, in den Statorspulen (4, 6, 7) fließende Ströme zu erfassen und ein die Ströme repräsentierendes Stromsignal zu erzeugen, wobei die Steuereinheit (2) eine Verarbeitungseinheit (17) aufweist, welche ausgebildet ist, in Abhängigkeit des Stromsignals und einer auf die Statorspulen (4, 6, 7) beaufschlagten Spannung und eines von dem Rotorlagesensors (8) erzeugten Rotorpositionssignals Oberwellen der elektromotorischen Kraft zu ermitteln und ein die Wirkung der Oberwellen kompensierendes Steuersignal (27) zu erzeugen und das kompensierende Steuersignal (27) dem Steuersignal zu überlagern, so dass die Wirkung der Oberwellen und so die Drehmomentwelligkeit wenigstens teilweise oder vollständig kompensiert werden können, **dadurch gekennzeichnet, dass** die Verarbeitungseinheit (17) einen RLS-Schätzer aufweist, welcher ausgebildet ist, die Oberwellen, insbesondere Phase und Amplitude der Oberwellen, mittels einer Methode des kleinsten Fehlerquadrats zu ermitteln, wobei die Verarbeitungseinheit (17) ausgebildet ist, den Stator (3) mittels einer flachheitsbasierten Steuerung in Abhängigkeit des kompensierenden Steuersignals (27) anzusteuern.

2. Elektromotor (1) nach Anspruch 1,
**dadurch gekennzeichnet, dass**
die Steuereinheit (2) ausgebildet ist, eine Spannung zum Beaufschlagen der Statorspulen (4, 6, 7) in Abhängigkeit des kompensierenden Steuersignals (27) zu erzeugen.

3. Elektromotor (1) nach einem der vorhergehenden Ansprüche,
**dadurch gekennzeichnet, dass**
die Verarbeitungseinheit (17) ausgebildet ist, ein ein kompensierendes Drehmoment repräsentierendes Drehmomentsignal in Abhängigkeit der von dem RLS-Schätzer ermittelten Oberwellen zu erzeugen, und das kompensierende Steuersignal (27) in Abhängigkeit des kompensierenden Drehmomentsignals zu erzeugen.

4. Elektromotor (1) nach einem der vorhergehenden Ansprüche,
**dadurch gekennzeichnet, dass**
die Verarbeitungseinheit (17) ein elektrisches Modell des Elektromotors (1) aufweist, das eine Stellgröße für die auf die Statorspulen (4, 6, 7) zu beaufschlagende Spannung in Abhängigkeit der Induktivität der Statorspulen (4, 6, 7) und eines ermittelten magnetischen Flusses repräsentiert, wobei der magnetische Fluss die zu kompensierenden Oberwellen aufweist, und die Verarbeitungseinheit ausgebildet ist, in Abhängigkeit der Stellgröße das kompensierende Steuersignal zu erzeugen.

5. Elektromotor (1) nach Anspruch 4,
**dadurch gekennzeichnet, dass**
der magnetische Fluss die Oberwellen in Form einer Fourierreihe repräsentiert.

6. Elektromotor (1) nach einem der vorhergehenden Ansprüche,
**dadurch gekennzeichnet, dass**
der Elektromotor (1) einen Temperatursensor (18) aufweist, welcher ausgebildet ist, eine Temperatur des Stators (3), insbesondere eines Blechpakets des Stators (3), zu erfassen und ein die Temperatur repräsentierendes Temperatursignal zu erzeugen, und die Verarbeitungseinheit (17) ausgebildet ist, das die Wirkung der Oberwellen kompensierende Steuersignal (27) zusätzlich in Abhängigkeit des Temperatursignals zu erzeugen.

7. Elektrische Servolenkung für ein Fahrzeug mit einem Elektromotor (1) nach einem der vorhergehenden Ansprüche, wobei die Servolenkung ausgebildet ist, mittels des Elektromotors (1) ein lenkunterstützendes Lenkmoment zu erzeugen.

8. Bremskraftverstärker für ein Fahrzeug mit einem Elektromotor (1) nach einem der vorhergehenden Ansprüche 1 bis 6, wobei der Bremskraftverstärker ausgebildet ist, mittels des Elektromotors (1) eine bremsunterstützende Bremskraft zu erzeugen.

9. Elektrofahrrad mit einem Elektromotor (1) nach einem der vorhergehenden Ansprüche 1 bis 6, wobei der Elektromotor (1) ein Antriebsmotor des Elektrofahrrades ist.

**Claims**

1. Electronically commutated electric motor (1) having a stator (3) and a rotor (5) and including a control unit (2) which is connected to the stator (3), which is designed to generate control signals for supplying stator coils (4, 6, 7) of the stator (3) with current for generating a rotating magnetic field, and the electric motor (1) is designed to at least partially compensate for a torque ripple of a torque generated by the rotor,
   wherein
   the electric motor (1) includes a rotor position sensor (8) and a current sensor (10), wherein the current sensor (10) is designed to detect currents flowing in the stator coils (4, 6, 7) and to generate a current signal representing the currents, wherein the control unit (2) includes a processing unit (17) which is designed to ascertain harmonics of the electromotive force and to generate a control signal (27) which compensates for the effect of the harmonics and to overlap the compensating control signal (27) with the control signal, as a function of the current signal and a voltage supplied to the stator coils (4, 6, 7) and a rotor position signal generated by the rotor position sensor (8), so that it is possible to compensate at least partially or completely for the effect of the harmonics and thus the torque ripple, **characterized in that** the processing unit (17) includes an RLS estimator which is designed to ascertain the harmonics, in particular the phase and amplitude of the harmonics, by means of a least-squares method, wherein the processing unit (17) is designed to control the stator (3) by means of a flatness-based control as a function of the compensating control signal (27).

2. Electric motor (1) according to Claim 1,
   **characterized in that**
   the control unit (2) is designed to generate a voltage for supplying the stator coils (4, 6, 7) as a function of the compensating control signal (27).

3. Electric motor (1) according to one of the preceding claims,
   **characterized in that**
   the processing unit (17) is designed to generate a torque signal representing a compensating torque as a function of the harmonics ascertained by the RLS estimator, and to generate the compensating control signal (27) as a function of the compensating torque signal.

4. Electric motor (1) according to one of the preceding claims,
   **characterized in that**
   the processing unit (17) includes an electrical model of the electric motor (1) which represents a manipulated variable for the voltage to be supplied to the stator coils (4, 6, 7) as a function of the inductance of the stator coils (4, 6, 7) and an ascertained magnetic flux, wherein the magnetic flux includes the harmonics to be compensated for, and the processing unit is designed to generate the compensating control signal as a function of the manipulated variable.

5. Electric motor (1) according to Claim 4,
   **characterized in that**
   the magnetic flux represents the harmonics in the form of a Fourier series.

6. Electric motor (1) according to one of the preceding claims,
   **characterized in that**
   the electric motor (1) includes a temperature sensor (18) which is designed to detect a temperature of the stator (3), in particular a plate pack of the stator (3), and to generate a temperature signal representing the temperature, and the processing unit (17) is designed to generate the control signal (27) compensating for the effect of the harmonics in addition as a function of the temperature signal.

7. Electrical power steering system for a vehicle including an electric motor (1) according to one of the preceding claims, wherein the power steering system is designed to generate a steering torque which aids steering by means of the electric motor (1).

8. Brake booster for a vehicle including an electric motor (1) according to one of the preceding Claims 1 to 6, wherein the brake booster is designed to generate a braking force which aids braking by means of the electric motor (1) .

**9.** Electric bicycle including an electric motor (1) according to one of the preceding Claims 1 to 6, wherein the electric motor (1) is a drive motor of the electric bicycle.

**Revendications**

**1.** Moteur électrique (1) à commutation électronique, présentant un stator (3), un rotor (5) et une unité de commande (2) reliée au stator (3) et configurée pour former des signaux de commande d'alimentation en courant de bobines (4, 6, 7) du stator (3) en vue de former un champ magnétique tournant,
le moteur électrique (1) étant configuré pour compenser au moins en partie une ondulation du couple de rotation produit par le rotor,
le moteur électrique (1) présentant un capteur (8) de position du rotor et un capteur de courant (10),
le capteur de courant (10) étant configuré pour saisir les courants qui s'écoulent dans les bobines de stator (4, 6, 7) et pour former un signal de courant représentant les courants,
l'unité de commande (2) présentant une unité de traitement (17) configurée pour déterminer les harmoniques de la force électromotrice en fonction du signal de courant, de la tension appliquée sur les bobines (4, 6, 7) du stator et d'un signal de position du rotor formé par le capteur (8) de position du rotor, pour former un signal de commande (27) qui compense l'effet des harmoniques et pour superposer au signal de commande le signal de commande (27) compensateur de telle sorte que l'effet des harmoniques et donc les ondulations du couple de rotation puissent être compensées complètement ou au moins en partie, **caractérisé en ce que**
l'unité de traitement (17) présente un estimateur RLS configuré pour déterminer les harmoniques et notamment la phase et l'amplitude des harmoniques au moyen d'une méthode de moindre carré de l'erreur et
**en ce que** l'unité de traitement (17) est configurée pour commander le stator (3) par une commande basée sur la planéité, en fonction du signal de commande (27) compensateur.

**2.** Moteur électrique (1) selon la revendication 1, **caractérisé en ce que** l'unité de commande (2) est configurée pour former en fonction du signal de commande (27) compensateur une tension appliquée sur les bobines (4, 6, 7) du stator.

**3.** Moteur électrique (1) selon l'une des revendications précédentes, **caractérisé en ce que** l'unité de traitement (17) est configurée pour former un signal de couple de rotation représentant le couple de rotation correcteur en fonction des harmoniques déterminées par l'estimateur RLS et pour former le signal de commande (27) compensateur en fonction du signal de couple de rotation compensateur.

**4.** Moteur électrique (1) selon l'une des revendications précédentes, **caractérisé en ce que** l'unité de traitement (17) présente un modèle électrique du moteur électrique (1) qui représente une grandeur de réglage de la tension à appliquer sur les bobines (4, 6, 7) du stator en fonction de l'inductance des bobines (4, 6, 7) du stator et du flux magnétique qui a été déterminé, le flux magnétique présentant les harmoniques compensatrices, et **en ce que** l'unité de traitement est configurée pour former le signal de commande compensateur en fonction de la grandeur de réglage.

**5.** Moteur électrique (1) selon la revendication 4, **caractérisé en ce que** le flux magnétique représente les harmoniques sous la forme d'une série de Fourier.

**6.** Moteur électrique (1) selon l'une des revendications précédentes, **caractérisé en ce que** le moteur électrique (1) présente un capteur de température (18) configuré pour saisir une température du stator (3) et notamment d'un empilement de tôles du stator (3) et pour former un signal de température qui représente la température et **en ce que** l'unité de traitement (17) est configurée pour former également en fonction du signal de température le signal de commande (27) compensant l'effet des harmoniques.

**7.** Servodirection électrique pour véhicule, présentant un moteur électrique (1) selon l'une des revendications précédentes, la servodirection étant configurée pour former au moyen du moteur électrique (1) un couple de braquage soutenant le braquage.

**8.** Amplificateur de force de freinage pour véhicule, présentant un moteur électrique (1) selon l'une des revendications 1 à 6 qui précèdent, l'amplificateur de force de freinage étant configuré pour produire au moyen du moteur électrique (1) une force de freinage qui soutient le freinage.

**9.** Vélo électrique présentant un moteur électrique (1) selon l'une des revendications 1 à 6 qui précèdent, le moteur électrique (1) étant un moteur d'entraînement du vélo électrique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120268052 A1

- WO 2012126029 A2

**In der Beschreibung aufgeführte Nicht-Patentliteratur**

- **DELELEAU E. et al.** Flatness based hierarchical control of the PM synchronous motor. *the American Control Conference, offenbart eine Ermittlung von Kupferverlusten einer elektrischen Maschine,* 2004